# EUROPEAN PATENT APPLICATION

(11) **EP 4 742 421 A1**
(43) Date of publication of application: **13.05.2026**
(21) Application number: 25210554.9
(22) Date of filing: 22.10.2025
(51) Int. Cl.: H01M 50/528, H01M 50/531, H01M 50/533, H01M 50/534, H01M 50/536, H01M 50/543, H01M 50/59, H01M 50/591, H01M 50/593

(54) **BATTERY AND BATTERY PACK INCLUDING THE SAME**

(30) Priority: 07.11.2024 KR 20240156905
(71) Applicant: SAMSUNG SDI CO., LTD., Yongin-si, Gyeonggi-do 17084 (KR)
(72) Inventor: JUNG, Yeon Ho, 16678 Suwon-si, Gyeonggi-do (KR); LIM, Hyun Yeon, 16678 Suwon-si, Gyeonggi-do (KR)
(74) Representative: Gulde & Partner

(57) **Abstract**

A battery and a battery pack are disclosed. A battery includes a case, an electrode assembly accommodated in the case and including an electrode, a tab member connected to the electrode and extending from the electrode assembly, a cap assembly facing the electrode assembly and including a terminal, a connection member between the electrode assembly and the cap assembly and connected to the terminal and the tab member, and an electrode protection member between the connection member and the electrode assembly.

## Description

### BACKGROUND

### 1. Field

Aspects of embodiments of the present disclosure relate to a battery and a battery pack including the same.

### 2. Description of the Related Art

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles, for example. Such a secondary battery includes electrodes including a positive electrode and/or a negative electrode, an electrode assembly including the electrodes, a case that accommodates the electrode assembly, electrode terminals connected to the electrode assembly, and the like.

As technology advances, secondary batteries with high capacity are desired. Accordingly, a plurality of secondary batteries may be electrically connected and used. For example, the secondary battery may be applied to an electronic device in the form of a battery module including a plurality of secondary batteries, and/or a battery pack including a plurality of secondary battery modules. According to an embodiment, the secondary battery pack may also be configured by a plurality of secondary batteries. In this case, the electronic device is an electronic device that requires high power and/or high capacity and may include, for example, an electric vehicle or the like.

A secondary battery typically includes an electrode assembly in which a positive electrode, a separator, and a negative electrode are alternately arranged. The electrode assembly is accommodated inside a case. A plurality of positive and negative electrodes (herein referred to as "electrodes") constituting the electrode assembly are electrically connected to the outside through positive and negative electrode tabs (herein referred to as "electrode tabs"), respectively. In this case, the positive and negative electrode tabs are electrically connected to positive and negative electrode terminals (herein referred to as ("electrode terminals") installed on a cap plate, respectively, and one or more connection members may be disposed between the electrode tab and the electrode terminal.

Typically, the electrode terminal may be physically joined to the connection member using metal-to-metal joining methods, such as welding. To this end, welding is performed between the electrode terminal and the connection member connected to the electrode assembly while the electrode assembly is inserted in the case. Welding processes such as heat welding and laser welding are widely used. However, due to the nature of welding processes that use high-energy heat sources or laser light sources, surrounding components, particularly the electrode assembly, are prone to damage during the welding process.

The above-described information disclosed in the background technology of the present invention is provided to improve understanding of the background of the present invention and thus may include information that does not form the related art.

### SUMMARY

According to an aspect of embodiments of the present invention, a battery and a battery pack including the same, in which damage to an electrode assembly during welding of an electrode terminal and a connection member is prevented or substantially prevented, are provided.

However, aspects and problems to be solved by the present invention are not limited to the above-mentioned aspects and problems to be solved, and other aspects and problems to be solved not mentioned can be clearly understood by those skilled in the art from the following description.

According to one or more embodiments of the present invention, a battery includes a case, an electrode assembly accommodated in the case and including an electrode, a tab member connected to the electrode and extending from the electrode assembly, a cap assembly facing the electrode assembly and including a terminal, a connection member between the electrode assembly and the cap assembly and connected to the terminal and the tab member, and an electrode protection member between the connection member and the electrode assembly.

According to one or more embodiments, the electrode protection member may include a material configured to block welding energy. In an embodiment, the welding energy may be a laser beam, and the electrode protection member may include a plastic material.

According to one or more embodiments, the electrode protection member may be coupled to the connection member. In an embodiment, the electrode protection member may include a fastening portion coupled to the connection member. The fastening portion may include a coupling hook, and the connection member may include an opening into which the coupling hook is inserted and coupled.

According to one or more embodiments, the electrode protection member may include a blocking member coupled to the connection member and configured to block the welding energy, and a heat dissipation layer on at least one surface of the blocking member. For example, the heat dissipation layer may include a thermal interface material. The thermal interface material may be any of silicone, epoxy, and polyimide.

According to one or more embodiments of the present invention, a battery includes a case having a rectangular parallelepiped shape, with an opening, an electrode assembly accommodated in the case and including an electrode, a tab member connected to the electrode and extending from the electrode assembly, a cap assembly having a plate shape, including a terminal, and arranged in the opening to face the electrode assembly, a connection member between the electrode assembly and the cap assembly, and including a first portion joined to the terminal by welding and a second portion different from the first portion and connected to the tab member, and an electrode protection member arranged below the first portion and between the connection member and the electrode assembly.

According to one or more embodiments, the electrode protection member may be formed of a material configured to block welding energy applied during the welding of the first portion. In an embodiment, the welding energy may be a laser beam, and the electrode protection member may include a plastic material.

According to one or more embodiments, the electrode protection member may include a blocking member coupled to the connection member and configured to block the welding energy, and a heat dissipation layer on at least one surface of the blocking member. For example, the blocking member may be coupled to the connection member. In an embodiment, the heat dissipation layer may include a thermal interface material. In an embodiment, the thermal interface material may be any of silicone, epoxy, and polyimide.

According to one or more embodiments, the blocking member may include a protection portion corresponding to a position of the first portion, and a fastening portion at a portion other than the protection portion and coupled to the connection member. In an embodiment, the fastening portion may include a coupling hook, and the connection member may include an opening formed in the second portion and in which the coupling hook is inserted and coupled.

According to one or more embodiments of the present invention, a battery pack includes a housing, and a plurality of batteries accommodated in the housing, wherein each of the batteries includes a case having a rectangular parallelepiped shape, with an opening, an electrode assembly accommodated in the case and including an electrode, a tab member connected to the electrode and extending from the electrode assembly, a cap assembly having a plate shape, including a terminal, and arranged in the opening to face the electrode assembly, a connection member between the electrode assembly and the cap assembly, and including a first portion joined to the terminal by welding and a second portion different from the first portion and connected to the tab member, and an electrode protection member arranged below the first portion and between the connection member and the electrode assembly.

According to one or more embodiments, the electrode protection member may include a blocking member coupled to the connection member and including a material configured to block welding energy applied during a welding process of the first portion, and a heat dissipation layer on at least one surface of the blocking member.

### BRIEF DESCRIPTION OF THE DRAWINGS

The following drawings included with the present specification are intended to illustrate some embodiments of the present invention, and the scope of the present invention will be more clearly understood from the accompanying drawings together with the following description of the invention; however, illustrations in the drawings are not to be construed as limiting the scope of the present invention, in which:
FIG. 1 is a perspective view schematically illustrating a configuration of a battery pack according to an embodiment of the present invention;
FIG. 2 is a perspective view schematically illustrating a configuration of a secondary battery according to an embodiment of the present invention;
FIG. 3 is an exploded perspective view schematically illustrating a configuration of the secondary battery of FIG. 2;
FIG. 4 is a cross-sectional view schematically illustrating a configuration of the secondary battery according to FIG. 2;
FIG. 5 is a view schematically illustrating a configuration of an electrode assembly according to an embodiment of the present invention;
FIG. 6 is a partial cross-sectional view of the secondary battery in FIG. 2, taken along the line VI-VI';
FIG. 7 is a perspective view illustrating an example of an electrode protection member according to an embodiment of the present invention;
FIG. 8 is an exploded perspective view schematically illustrating a configuration of the electrode protection member and a connection member according to an embodiment of the present invention; and
FIG. 9 is a perspective view illustrating an example in which the electrode protection member is coupled to the connection member.

### DETAILED DESCRIPTION

Herein, some example embodiments of the present invention will be described in further detail with reference to the accompanying drawings. However, the terms or words used in the present specification and claims are not to be construed as being limited to ordinary or dictionary meanings and are to be construed as having meanings and concepts consistent with the scope of the present invention based on the principle that an inventor can appropriately define concepts and terms to explain the invention of the inventor in the best way. Therefore, the embodiments described herein and the configurations illustrated in the drawings are some example embodiments and are not necessarily representative of the full scope of the present invention, and, thus, it is to be understood that various changes and modifications may be made at the time of filing the present application.

Further, when used in the present specification, "comprise/include" and/or "comprising/including" may specify the presence of described shapes, numbers, steps, operations, members, elements, and/or groups thereof, but may not exclude the presence or addition of one or more other shapes, numbers, steps, operations, members, elements, and/or groups thereof.

Further, for convenience of understanding of the present invention, the accompanying drawings may be illustrated not at actual scales. Rather, sizes of some components may be exaggerated. In addition, the same reference numerals may be assigned to the same components in different embodiments.

The description that two objects for comparison are "the same" as each other may denote that they are the same or substantially the same as each other. Thus, the range of the expression "the same" or "substantially the same" may include a case of having a deviation considered as a low degree, for example, a deviation within 5%. In addition, the description that a certain parameter is the same in a certain region may denote that the parameter is the same from an average perspective.

Terms including ordinals, such as "first" and "second" may be used to describe various components, but the components are not limited by these terms. These terms are used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

In addition, when it is described that a component is "connected," "coupled," or "accessed" to another component, these components may be directly connected or accessed to each other, or one or more other components may be "interposed" between these components, or these components may be "connected", "coupled" or "accessed" through one or more other components.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more" and "at least one" modify the entire list of elements and do not modify the individual elements of the list.

The expression "A and/or B" throughout the specification means A, B, or A and B, unless otherwise differently stated. The expression "C to D" means C or more and D or less, unless otherwise specified.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," and the like may be used herein to describe various elements, components, regions, layers, and/or sections, these elements, components, regions, layers, and/or sections are not to be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is be understood that the spatially relative terms are intended to encompass different orientations of the device in use or operation in addition to the orientation depicted in the figures. For example, when the device in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

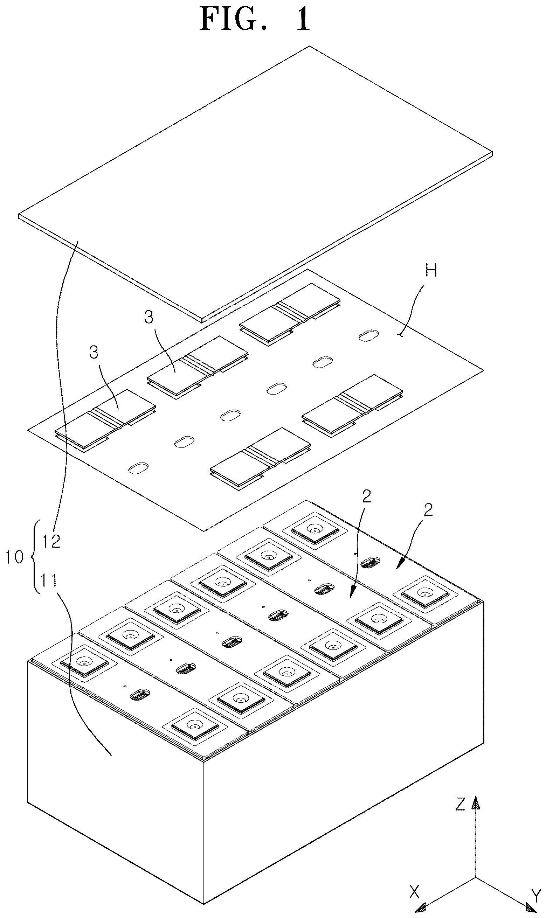

FIG. 1 is a perspective view schematically illustrating a configuration of a battery pack according to an embodiment of the present invention.

Referring to FIG. 1, the battery pack may include a housing 10, a secondary battery 2, and a bus bar 3.

The housing 10 forms a general exterior of the battery pack, and may provide a space in which a plurality of secondary batteries 2 may be accommodated. The housing 10 may include a housing body 11 and a cover 12.

In an embodiment, the housing body 11 may be formed to have a box shape, with an empty interior and an open surface. However, a cross-sectional shape of the housing body 11 is not limited to a quadrangular shape, as shown in FIG. 1, and may be varied to have any of various shapes, such as a polygonal shape, a circular shape, and an oval shape.

The cover 12 may be coupled to the housing body 11 and may close an internal space of the housing body 11. In an example, the cover 12 may be formed to have a generally plate shape and may be disposed to face the open surface of the housing body 11. The cover 12 may be fixed to the housing body 11 by any of various types of coupling methods, such as bolting, welding, fitting, and the like.

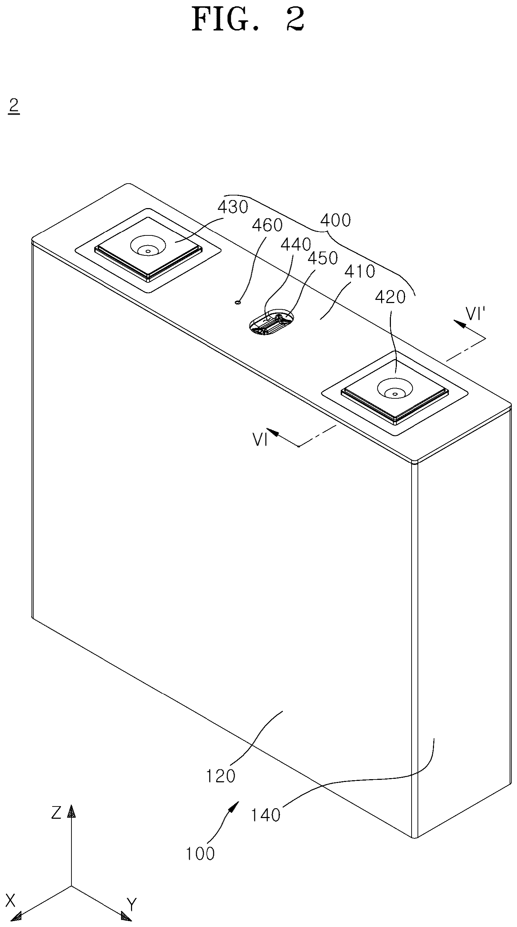

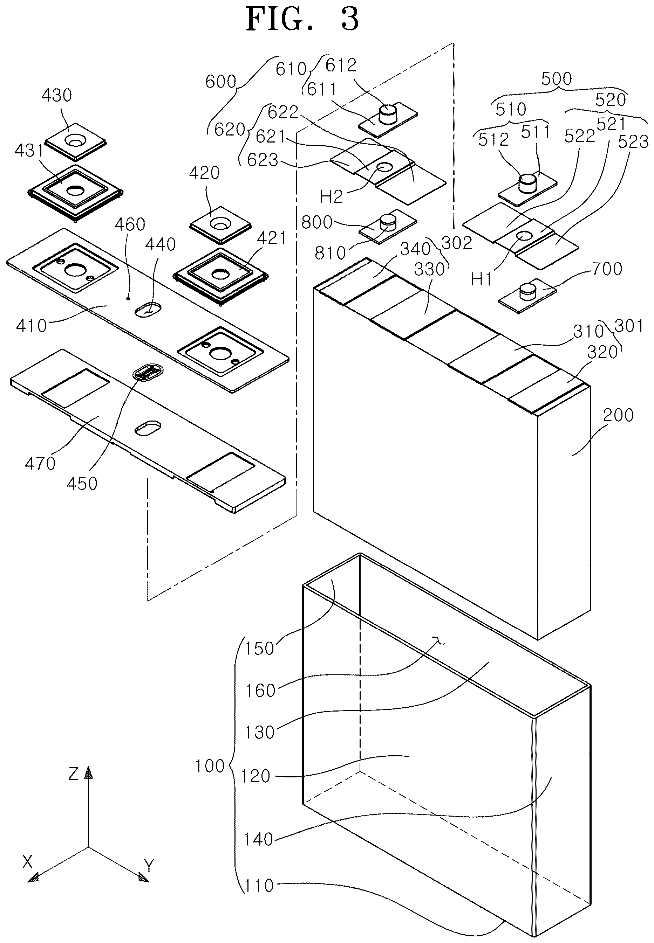

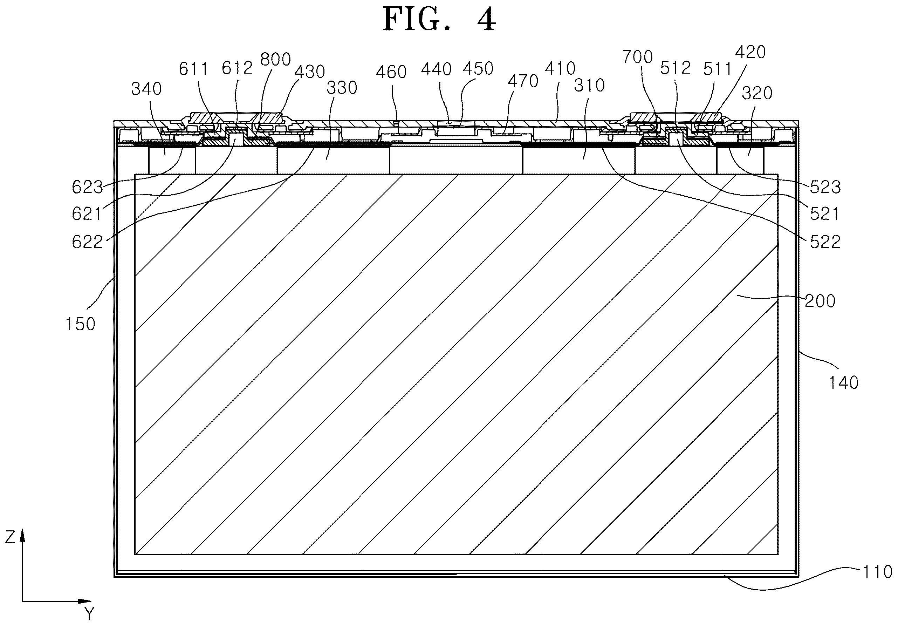

The secondary battery 2 may function as a unit structure, which stores and supplies power, in the battery pack. FIG. 2 is a perspective view schematically illustrating a configuration of the secondary battery according to an embodiment of the present invention; FIG. 3 is an exploded perspective view schematically illustrating a configuration of the secondary battery of FIG. 2; and FIG. 4 is a cross-sectional view schematically illustrating a configuration of the secondary battery of FIG. 2.

Herein, a case in which the secondary battery is a lithium-ion secondary battery having a prismatic shape will be described as an example. However, the present invention is not limited thereto, and the secondary battery may be a lithium polymer battery or a cylindrical battery, for example.

Referring to FIGS. 2 to 4, the secondary battery 2 includes a case 100, an electrode assembly 200, first and second tab members 301 and 302, a cap assembly 400, first and second connection members 500 and 600, and first and second electrode protection members 700 and 800.

The case 100 generally forms an exterior of the secondary battery 2 and may accommodate the electrode assembly 200 therein. The case 100 may include a bottom portion 110, a front surface portion 120, a rear surface portion 130, a first side surface portion 140, and a second side surface portion 150.

The bottom portion 110 may form a lower exterior of the case 100 (based on FIG. 3). In an embodiment, the bottom portion 110 may have a rectangular plate shape. The bottom portion 110 may be seated on a bottom surface of the housing body 11.

The front surface portion 120, the rear surface portion 130, the first side surface portion 140, and the second side surface portion 150 may form a perimeter exterior of the case 100. The front surface portion 120, the rear surface portion 130, the first side surface portion 140, and the second side surface portion 150 may have the form of plates extending upward (based on FIG. 3) from edges of the bottom portion 110. The front surface portion 120, the rear surface portion 130, the first side surface portion 140, and the second side surface portion 150 may be disposed to surround an upper space of the bottom portion 110. In an embodiment, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in a length direction of the housing 10. In an embodiment, the front surface portion 120 and the rear surface portion 130 may be disposed parallel to each other. In an embodiment, the front surface portion 120 and the rear surface portion 130 may have a same area.

The first side surface portion 140 and the second side surface portion 150 may be disposed to face each other in a width direction of the housing 10. In an embodiment, the first side surface portion 140 and the second side surface portion 150 may be disposed parallel to each other. In an embodiment, the first side surface portion 140 and the second side surface portion 150 may have a same area. The first side surface portion 140 and the second side surface portion 150 may each have a smaller area than each of the front surface portion 120 and the rear surface portion 130.

The case 100 may further include an opening 160. The opening 160 may refer to a space enclosed by upper end portions of the front surface portion 120, the rear surface portion 130, the first side surface portion 140, and the second side surface portion 150. The opening 160 interconnects internal and external spaces of the case 100. Accordingly, in an embodiment, the case 100 may have a rectangular parallelepiped shape with an open upper side.

As described herein, a first direction may refer to a direction parallel to a Z-axis based on FIGS. 3 and 4 and a direction from the bottom portion 110 toward the opening 160. A second direction may refer to a direction parallel to a Y-axis based on FIGS. 3 and 4 and a direction from the first side surface portion 140 toward the second side surface portion 150. A third direction may refer to a direction parallel to an X-axis based on FIGS. 3 and 4 and a direction from the front surface portion 120 toward the rear surface portion 130.

The electrode assembly 200 may function as a unit structure for performing a power charging and discharging operation in the secondary battery. The electrode assembly 200 may be accommodated inside the case 100.

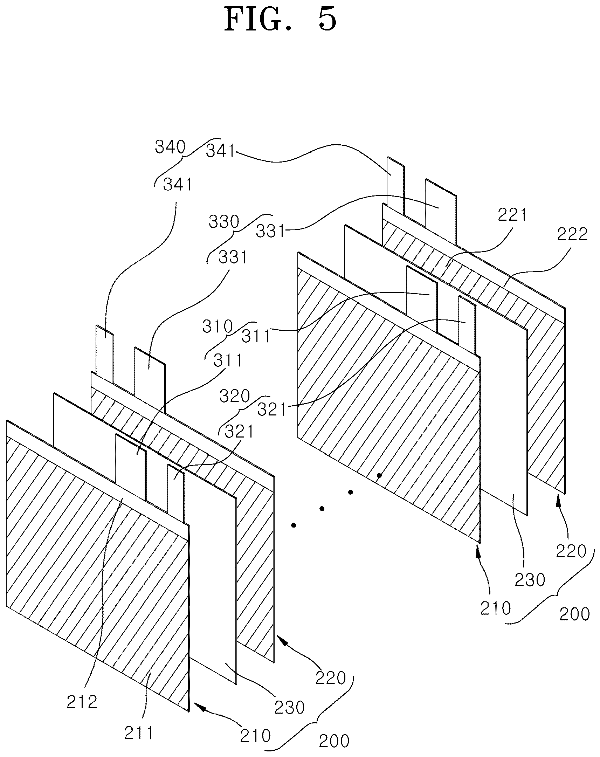

FIG. 5 is a view schematically illustrating a configuration of an electrode assembly according to an embodiment of the present invention. Referring to FIG. 5, the electrode assembly 200 may include a first electrode 210, a second electrode 220, and a separator 230 disposed between the first electrode 210 and the second electrode 220. In an embodiment, the first electrode 210, the separator 230, and the second electrode 220 may each be provided in plural.

Herein, a case in which the electrode assembly 200 has a stack form in which a plurality of first electrodes 210, a plurality of separators 230, and a plurality of second electrodes 220 are stacked sequentially in the third direction will be described as an example. However, the electrode assembly 200 is not limited to the form described above, and may also be formed such that the first electrode 210, the separator 230, and the second electrode 220 are stacked and then wound around a winding axis in a clockwise or counterclockwise direction.

The first electrode 210 may function as one of a positive electrode and a negative electrode of the electrode assembly 200. Herein, a case in which the first electrode 210 is the positive electrode of the electrode assembly 200 will be described as an example. However, the first electrode 210 is not limited to thereto, and may function as the negative electrode of the electrode assembly 200.

The first electrode 210 may be formed in the form of a foil including a metal material, such as aluminum or an aluminum alloy. A type, size, and shape of the first electrode 210 are not particularly limited as long as the first electrode 210 has conductivity and does not cause chemical changes in the secondary battery. However, a cross-sectional shape of the first electrode 210 may be varied to various shapes other than a rectangular shape, as shown in FIG. 5.

In an embodiment, a plurality of first electrodes 210 may be provided. The plurality of first electrodes 210 may be arranged in the third direction between the front surface portion 120 and the rear surface portion 130 of the case 100. A number of first electrodes 210 may be varied according to a charging capacity or the like of the secondary battery 2.

A first active material layer 211 may be formed on at least a portion of the first electrode 210. The first active material layer 211 may be formed on both, or opposite, surfaces of the first electrode 210, or may be formed on only one surface of the first electrode 210. In an embodiment, the first electrode 210 functions as a positive electrode, and the first active material layer 211 may include a positive electrode active material.

The positive electrode active material may include a compound (lithiated intercalation compound) capable of reversibly intercalating and deintercalating lithium. In an embodiment, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNixCoyMnzO₂, NCM). Here, conditions of 0<x<1, 0<y<1, 0<z<1, and x+y+z=1 may be satisfied. The positive electrode active material may include one of LiFePO₄, LiMnFePO₄, and LiNixCoyMnzO₂, and may include two or all of LiFePO₄, LiMnFePO₄, and LiNixCoyMnzO₂.

The first active material layer 211 may further include a positive electrode conductive material.

The positive electrode conductive material imparts conductivity to the first active material layer 211, and any suitable electrically conductive material that does not cause a chemical change in the battery may be used. Examples of the positive electrode conductive material may include a carbon-based material, such as natural graphite, artificial graphite, carbon black, acetylene black, Ketjen black, carbon fiber, carbon nanofiber, carbon nanotubes, and the like, a metal-based material in the form of a metal powder or metal fiber including copper, nickel, aluminum, silver, and the like, a conductive polymer, such as a polyphenylene derivative, or a mixture thereof.

The first active material layer 211 may further include a positive electrode binder.

The positive electrode binder adheres particles constituting the positive electrode active material to each other well, and adheres the positive electrode active material to the first electrode 210 well. Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 on which the first active material layer 211 is not formed. In an embodiment, the first uncoated portion 212 may be disposed in an upper end region of the first electrode 210, which is disposed to face the opening 160 from the inside of the case 100. However, the first uncoated portion 212 is not limited to such a form, and, in an embodiment, may be formed across an entire edge region of the first electrode 210.

The second electrode 220 can function as the other one of the positive electrode and the negative electrode of the electrode assembly 200. Herein, a case in which the second electrode 220 is the negative electrode of the electrode assembly 200 will be described as an example. However, the second electrode 220 is not limited thereto, and may function as the positive electrode of the electrode assembly 200.

In an embodiment, a plurality of second electrodes 220 may be provided. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be disposed to be spaced apart from the first electrode 210 by a distance (e.g., a predetermined distance) in the third direction.

The second electrode 220 may be formed in the form of a foil including a metal material, such as copper, a copper alloy, nickel, or a nickel alloy. A type, size, and shape of the second electrode 220 are not particularly limited as long as the second electrode 220 has conductivity and does not cause chemical changes in the secondary battery. However, a cross-sectional shape of the second electrode 220 may be varied to various shapes other than a rectangular shape, as shown in FIG. 5.

A second active material layer 221 may be formed on at least a portion of the second electrode 220. The second active material layer 221 may be formed on both, or opposite, surfaces of the second electrode 220, or may be formed on only one surface of the second electrode 220.

In an embodiment, the second electrode 220 functions as the negative electrode, and the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous, plate-shaped, flake-shaped, spherical-shaped or fiber-shaped natural graphite or artificial graphite. Examples of the amorphous carbon may include soft carbon or hard carbon, a mesophase pitch carbide product, calcined coke, and the like.

In an embodiment, the lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x≤2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnOx (0 < x ≤ 2, e.g., SnO2), SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon coated on a surface of the silicon particles. For example, the silicon-carbon composite may include a secondary particle (core) in which silicon primary particles are agglomerated and an amorphous carbon coating layer (shell) located on the surface of the secondary particle. In an embodiment, the amorphous carbon may be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material imparts conductivity to the second active material layer 221, and any suitable electrically conductive material that does not cause a chemical change in the battery may be used. Examples of the negative electrode conductive material may include a carbon-based material, such as natural graphite, artificial graphite, carbon black, acetylene black, Ketjen black, carbon fiber, carbon nanofiber, carbon nanotubes, and the like, a metal-based material in the form of a metal powder or metal fiber including copper, nickel, aluminum, silver, and the like, a conductive polymer, such as a polyphenylene derivative, or a mixture thereof.

The negative electrode binder adheres particles constituting the negative electrode active material to each other well, and adheres the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 on which the second active material layer 221 is not formed. The second uncoated portion 222 may be disposed in an upper end region of the second electrode 220 disposed to face the opening 160 from the inside of the case 100. However, the second uncoated portion 222 is not limited to such a form, and, in an embodiment, may be formed across an entire edge region of the second electrode 220.

The separator 230 may be disposed between the first electrode 210 and the second electrode 220. The separator 230 may prevent or substantially prevent a short circuit of the first electrode 210 and the second electrode 220 while allowing the movement of lithium ions between the first electrode 210 and the second electrode 220.

In an embodiment, the separator 230 may be disposed to cover an entire surface region of the electrode assembly 200. Accordingly, the separator 230 may prevent or substantially prevent the first electrode 210 and the second electrode 220 from being directly exposed to the outside of the electrode assembly 200.

In an embodiment, the separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both, or opposite, surfaces of the porous substrate.

The porous substrate may be a polymer film formed of a polymer, or a copolymer or a mixture of two or more selected from polyolefins, such as polyethylene, polypropylene, and the like, polyesters, such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., Teflon).

The organic material may include a polyvinylidene fluoride-based polymer or a (meth)acrylic-based polymer.

In an embodiment, the inorganic material may include inorganic particles selected from Al₂O₃, SiO₂, TiO₂, SnO2, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic and inorganic materials may be present by being mixed in one coating layer or may be present in a form in which a coating layer including organic materials and a coating layer including inorganic materials are stacked.

The first tab member 301 is connected to the first electrode 210, and may protrude outward from the electrode assembly 200. In an embodiment, the first electrode 210 functions as the positive electrode, and the first tab member 301 may function as a positive electrode tab of the secondary battery 2. However, the present invention is not limited thereto, and if the first electrode 210 is a negative electrode, the first tab member 301 may function as a negative electrode tab of the secondary battery 2.

The first tab member 301 may extend in the first direction from the electrode assembly 200. That is, the first tab member 301 may extend toward the opening 160 from the inside of the case 100.

The first tab member 301 may include one or a plurality of tab members. As an example, the first tab member 301 may include a first inner tab member 310 and a first outer tab member 320. However, the present invention is not limited thereto, and the first tab member 301 may include one tab member or three or more tab members.

The first inner tab member 310 and the first outer tab member 320 may be spaced apart from each other in the second direction. As an example, the first outer tab member 320 and the first inner tab member 310 may be disposed sequentially in the second direction. That is, the first outer tab member 320 may be disposed at a position spaced apart from the first inner tab member 310 by a distance (e.g., a predetermined distance) in a direction opposite to the second direction. The first outer tab member 320 may be disposed at a position relatively closer to the first side surface portion 140 than the first inner tab member 310.

The first inner tab member 310 may include a first inner tab 311. The first inner tab 311 may have a form of a foil extending in the first direction from the first uncoated portion 212 of the first electrode 210. In an embodiment, the first inner tab 311 may have a generally rectangular shape. However, the shape of the first inner tab 311 is not limited thereto, and may be variously changed.

In an embodiment, the first inner tab 311 may be integrally formed with the first electrode 210. For example, the first inner tab 311 may be a remaining region of the first uncoated portion 212 after a partial region of the first uncoated portion 212 has been cut or removed through a process, such as notching. In another embodiment, the first inner tab 311 may be fabricated separately from the first electrode 210 and then connected to the first uncoated portion 212 by welding or the like. In an embodiment, a material of the first inner tab 311 may be the same as a material of the first electrode 210.

In an embodiment, a plurality of first inner tabs 311 may be provided. The number of first inner tabs 311 may be the same as the number of first electrodes 210. The first inner tabs 311 may individually extend from the first uncoated portions 212 of the different first electrodes 210, respectively. The adjacent first inner tabs 311 may be disposed to face each other in the third direction. The adjacent first inner tabs 311 may be disposed parallel to each other. The first inner tab member 310 may be an assembly of a plurality of first inner tabs 311 stacked in the third direction. The adjacent first inner tabs 311 may be in contact with each other and may be spaced apart from each other by a thickness of the separator 230.

The first outer tab member 320 may include a first outer tab 321. The first outer tab 321 may have a form of a foil extending in the first direction from the first uncoated portion 212 of the first electrode 210. The first outer tab 321 may be disposed at a position spaced apart from the first inner tab 311 by a distance (e.g., a predetermined distance) in a direction opposite to the second direction. In an embodiment, the first outer tab 321 may have a generally rectangular shape. However, the shape of the first outer tab 321 is not limited thereto, and may be variously changed.

In an embodiment, the first outer tab 321 may be integrally formed with the first electrode 210. For example, the first outer tab 321 may be a region that excludes the first inner tab 311 from a remaining region of the first uncoated portion 212 after a partial region of the first uncoated portion 212 has been cut or removed through a process, such as notching. In another embodiment, the first outer tab 321 may be fabricated separately from the first electrode 210 and then connected to the first uncoated portion 212 by welding or the like. In an embodiment, a material of the first outer tab 321 may be the same as a material of the first electrode 210.

In an embodiment, a plurality of first outer tabs 321 may be provided. The number of first outer tabs 321 may be the same as the number of first electrodes 210. The first outer tabs 321 may individually extend from the first uncoated portions 212 of the different first electrodes 210, respectively. The adjacent first outer tabs 321 may be disposed to face each other in the third direction. The adjacent first outer tabs 321 may be disposed parallel to each other. Accordingly, the first outer tab member 320 may be an assembly of the plurality of first outer tabs 321 stacked in the third direction. The adjacent first outer tabs 321 may be in contact with each other and may be spaced apart from each other by the thickness of the separator 230.

The secondary battery 2 may further include a second tab member 302. The second tab member 302 is connected to the second electrode 220, and may protrude outward from the electrode assembly 200. In an embodiment, the second electrode 220 functions as the negative electrode, and the second tab member 302 may function as a negative electrode tab of the secondary battery 2. However, the second tab member 302 is not limited thereto, and may function as a positive electrode tab of the secondary battery 2 if the second electrode 220 is the positive electrode.

The second tab member 302 may extend in the first direction from the electrode assembly 200. That is, the second tab member 302 may extend toward the opening 160 from the inside of the case 100.

The second tab member 302 may include one or a plurality of tab members. As an example, the second tab member 302 may include a second inner tab member 330 and a second outer tab member 340. However, the present invention is not limited thereto, and the second tab member 302 may include one tab member or three or more tab members.

The second inner tab member 330 and the second outer tab member 340 may be spaced apart from each other in the second direction. In an example, the second inner tab member 330 and the second outer tab member 340 may be disposed sequentially in the second direction. That is, the second outer tab member 340 may be disposed at a position spaced apart from the second inner tab member 330 by a distance (e.g., a predetermined distance) in the second direction. The second outer tab member 340 may be disposed at a position relatively closer to the second side surface portion 150 than the second inner tab member 330.

The second inner tab member 330 may include a second inner tab 331. The second inner tab 331 may have a form of a foil extending in the first direction from the second uncoated portion 222 of the second electrode 220. In an embodiment, the second inner tab 331 may have a generally rectangular shape. However, the shape of the second inner tab 331 is not limited thereto, and may be variously changed.

In an embodiment, the second inner tab 331 may be integrally formed with the second electrode 220. For example, the second inner tab 331 may be a remaining region of the second uncoated portion 222 after a partial region of the second uncoated portion 222 has been cut or removed through a process, such as notching. In another embodiment, the second inner tab 331 may be fabricated separately from the second electrode 220 and then connected to the second uncoated portion 222 by welding or the like. In an embodiment, a material of the second inner tab 331 may be the same as a material of the second electrode 220.

In an embodiment, a plurality of second inner tabs 331 may be provided. The number of second inner tabs 331 may be the same as the number of second electrodes 220. The second inner tabs 331 may individually extend from the second uncoated portions 222 of the different second electrodes 220, respectively. The adjacent second inner tabs 331 may be disposed to face each other in the third direction. The adjacent second inner tabs 331 may be disposed parallel to each other. Accordingly, the second inner tab member 330 may be an assembly of the plurality of second inner tabs 331 stacked in the third direction. The adjacent second inner tabs 331 may be in contact with each other and may be spaced apart from each other by the thickness of the separator 230.

The second outer tab member 340 may include a second outer tab 341. The second outer tab 341 may have a form of a foil extending in the first direction from the second uncoated portion 222 of the second electrode 220. The second outer tab 341 may be disposed at a position spaced apart from the second inner tab 331 by a distance (e.g., a predetermined distance) in the second direction. In an embodiment, the second outer tab 341 may have a generally rectangular shape. However, the shape of the second outer tab 341 is not limited thereto, and may be variously changed.

In an embodiment, the second outer tab 341 may be integrally formed with the second electrode 220. For example, the second outer tab 341 may be a region that excludes the second inner tab 331 from a remaining region of the second uncoated portion 222 after a partial region of the second uncoated portion 222 has been cut or removed through a process, such as notching. In another embodiment, the second outer tab 341 may be fabricated separately from the second electrode 220 and then connected to the second uncoated portion 222 by welding or the like. In an embodiment, a material of the second outer tab 341 may be the same as a material of the second electrode 220.

In an embodiment, a plurality of second outer tabs 341 may be provided. The number of second outer tabs 341 may be the same as the number of second electrodes 220. The second outer tabs 341 may individually extend from the second uncoated portions 222 of the different second electrodes 220, respectively. The adjacent second outer tabs 341 may be disposed to face each other in the third direction. The adjacent second outer tabs 341 may be disposed parallel to each other. Accordingly, the second outer tab member 340 may be an assembly of the plurality of second outer tabs 341 stacked in the third direction. The adjacent second outer tabs 341 may be in contact with each other and may be spaced apart from each other by the thickness of the separator 230.

The cap assembly 400 may be coupled to the case 100 and may seal the case 100. The cap assembly 400 may be disposed to face the electrode assembly 200 in the first direction. The cap assembly 400 may include a cap plate 410, a first terminal 420, and a second terminal 430.

The cap plate 410 forms a general exterior of the cap assembly 400, and may support (e.g., entirely support) the first terminal 420 and the second terminal 430. The cap plate 410 may be formed to have a shape of a flat plate. The cap plate 410 may be disposed in the opening 160 of the case 100. The cap plate 410 may be disposed to face the electrode assembly 200 in the first direction. That is, the cap plate 410 may be disposed at a position spaced apart from the electrode assembly 200 by a distance (e.g., a predetermined distance) in the first direction. The cap plate 410 may be disposed parallel to the bottom portion 110 of the case 100.

The cap plate 410 may be seated on an upper end portion of the case 100, and, in an embodiment, on upper end portions of the front surface portion 120, the rear surface portion 130, the first side surface portion 140, and the second side surface portion 150. The cap plate 410 may be coupled to the case 100 by any of various types of coupling methods, such as welding, latching, bolting, fitting coupling, and the like.

The first terminal 420 may be inserted into the cap plate 410. The first terminal 420 may be electrically connected to the first electrode 210. In an embodiment, the first electrode 210 functions as the positive electrode, and the first terminal 420 may be a positive electrode terminal of the secondary battery 2. In an embodiment, an upper end portion of the first terminal 420 may protrude outward in the first direction from the cap plate 410.

In FIG. 3, the first terminal 420 is illustrated as having a rectangular planar shape, as an example, but the planar shape of the first terminal 420 is not limited thereto, and may have any of various shapes, such as a circular, elliptical, or polygonal shape. The first terminal 420 may be formed of an electrically conductive material, such as aluminum, nickel, copper, or the like.

A first gasket 421 may be installed between the cap plate 410 and the first terminal 420. The first gasket 421 may electrically insulate the cap plate 410 from the first terminal 420, and may prevent or substantially prevent moisture or foreign substances from entering between the cap plate 410 and the first terminal 420.

The first gasket 421 may be formed of an insulating material, such as polyethylene (PE), polypropylene (PP), polyethylene terephthalate (PET), rubber, or the like. The first gasket 421 may be fixed between the cap plate 410 and the first terminal 420 by press-fitting, injection molding, adhesion, or the like.

The second terminal 430 may be inserted into the cap plate 410. The second terminal 430 may be electrically connected to the second electrode 220. In an embodiment, the second electrode 220 functions as the negative electrode, and the second terminal 430 may be a negative electrode terminal of the secondary battery 2. In an embodiment, an upper end portion of the second terminal 430 may protrude outward from the cap plate 410 in the first direction.

In FIG. 3, the second terminal 430 is illustrated as having a rectangular planar shape, as an example, but the planar shape of the second terminal 430 is not limited thereto, and may have any of various shapes, such as a circular, elliptical, or polygonal shape. The second terminal 430 may be formed of an electrically conductive material, such as aluminum, nickel, copper, or the like.

A second gasket 431 may be installed between the cap plate 410 and the second terminal 430. The second gasket 431 may electrically insulate the cap plate 410 from the second terminal 430 and prevent or substantially prevent moisture or foreign substances from entering between the cap plate 410 and the second terminal 430.

The second gasket 431 may be formed of an insulating material, such as polyethylene (PE), polypropylene (PP), polyethylene terephthalate (PET), rubber, or the like. The second gasket 431 may be fixed between the cap plate 410 and the second terminal 430 by press-fitting, injection molding, adhesion, or the like.

In an embodiment, the cap assembly 400 may further include a vent hole 440 and a vent 450. The vent hole 440 may be formed to have a shape of a hole vertically passing through both, or opposite, surfaces of the cap plate 410 in the first direction. The vent hole 440 may provide a path for flames, gases, smoke, or the like formed inside the case 100 to be discharged to the outside of the case 100 in the event of a thermal runaway of the secondary battery 2 due to overcurrent or the like. In an embodiment, the vent hole 440 may be disposed between the first terminal 420 and the second terminal 430. A cross-sectional shape of the vent hole 440 may have any of various shapes, such as an oval shape, a circular shape, and a polygonal shape.

The vent 450 is installed in the vent hole 440, and may open and close in response to changes in internal pressure of the case 100. That is, the vent 450 may close the vent hole 440 during a normal operation of the secondary battery 2 to prevent or substantially prevent an electrolyte or the like inside the case 100 from leaking out of the case 100, or to block moisture, foreign substances, or the like from entering the case 100. The vent 450 may open the vent hole 440 during thermal runaway of the secondary battery 2 to guide flames, gases, smoke, or the like formed inside the case 100 to be discharged to the outside of the case 100.

The vent 450 may have a generally plate shape. The vent 450 may be fixed to the cap plate 410 by any of various types of coupling methods, such as welding, bolting, latching, fitting coupling, and the like. The vent 450 may be disposed inside the vent hole 440, or may be disposed on an upper or lower side of the cap plate 410 to face the vent hole 440 in the first direction.

In an embodiment, a thickness of the vent 450 in the first direction may be less than a thickness of the cap plate 410. Accordingly, the vent 450 may easily rupture or fracture if the internal pressure of the case 100 rises. In an embodiment, the vent 450 may include a notch formed to be recessed inward in the vent 450 to preferentially fracture if the internal pressure of the case 100 rises.

The cap assembly 400 may further include an electrolyte injection port 460 which is formed through the cap plate 410 and in which a sealing cap may be installed. The electrolyte injection port 460 may be disposed to be spaced apart from the vent hole 440 by a distance (e.g., a predetermined distance) in the second direction or in the direction opposite to the second direction. In an embodiment, the electrolyte injection port 460 may be disposed between the first terminal 420 and the second terminal 430.

The cap assembly 400 may further include an insulating plate 470. The insulating plate 470 may be disposed between the cap plate 410 and the electrode assembly 200. The insulating plate 470 may insulate the cap plate 410 from the electrode assembly 200 by advantageously preventing or substantially preventing direct contact therebetween. The insulating plate 470 may fix the position of the electrode assembly 200 inside the case 100. The insulating plate 470 may prevent or substantially prevent the electrode assembly 200 from breaking if the cap plate 410 is deformed toward the inside of the case 100 by an external impact or the like.

The insulating plate 470 may be disposed inside the case 100 to face the electrode assembly 200 in the first direction. That is, the electrode assembly 200, the insulating plate 470, and the cap plate 410 may be sequentially disposed in the first direction. The insulating plate 470 may be fixed to an inner side surface of the case 100 by any of various types of coupling methods, such as fitting, welding, bolting, latching, adhesion, and the like. The insulating plate 470 may be in contact with a surface of the electrode assembly 200 from which the first tab member 301 and the second tab member 302 extend. The insulating plate 470 may be formed of an insulating material, such as polyethylene (PE), polypropylene (PP), polyethylene terephthalate (PET), rubber, or the like.

The first connection member 500 may be disposed between the electrode assembly 200 and the cap assembly 400. The first connection member 500 may be connected to the first terminal 420 and the first tab member 301. The first connection member 500 may electrically connect the first terminal 420 and the first tab member 301. The first connection member 500 may be formed of an electrically conductive material. In an embodiment, the first connection member 500 may be formed of a same material as the first terminal 420. In an embodiment, the first connection member 500 may comprises a first portion joined to the first terminal 420 by welding and a second portion different from the first portion and connected to the first tab member 301.

The first connection member 500 may be implemented in various ways depending on a type of the secondary battery, a shape or arrangement position of the first tab member 301, a shape or arrangement position of the first terminal 420, and the like.

As an example, the first connection member 500 may include a first current collector 510 and a first current collector plate 520, as shown in FIG. 3. In FIG. 3, the first current collector 510 and the first current collector plate 520 are illustrated as separate components, but the present invention is not limited thereto. For example, the first current collector 510 and the first current collector plate 520 may be formed as an integral member. The first current collector 510 may be connected to the first terminal 420.

The first current collector 510 may include a first body 511 and a first boss 512. The first body 511 may form a side of an exterior of the first current collector 510, and support the first boss 512. The first body 511 and the first boss 512 may be manufactured as separate members and then joined together or may be formed as an integral member.

The first body 511 may be disposed between the electrode assembly 200 and the first terminal 420. The first body 511 may be spaced apart from a lower surface of the first terminal 420 by a distance (e.g., a predetermined distance) in a direction opposite the first direction. The first body 511 may be disposed in the insulating plate 470, and the first body 511 may also be disposed on an upper or lower side of the insulating plate 470. A planar shape of the first body 511 may have any of various shapes, such as a circular shape, an oval shape, a polygonal shape, and the like, in addition to the rectangular shape, as illustrated in FIG. 3.

The first boss 512 may extend from the first body 511 and may be connected to the first terminal 420. The first boss 512 may have a cylindrical shape extending in the first direction from the first body 511. The first boss 512 may have a cylindrical shape with a thickness (e.g., a predetermined thickness) and a hollow interior.

An upper end surface of the first boss 512 may be in contact with the lower surface of the first terminal 420. In this case, the first boss 512 may vertically pass through the insulating plate 470 in the first direction. In an embodiment, the upper end surface of the first boss 512 may be joined to the lower surface of the first terminal 420 by laser welding. A planar shape of the first boss 512 may have any of various shapes, such as an oval shape, a polygonal shape, and the like, in addition to the circular shape, as illustrated in FIG. 3.

The first current collector plate 520 may be fixed to the first current collector 510, and connected to the first tab member 301. In an embodiment, the first current collector plate 520 may include a first center plate 521, a first inner plate 522, and a first outer plate 523.

The first center plate 521 may form a central portion of the exterior of the first current collector plate 520, and may be connected to the first current collector 510. The first center plate 521 may be disposed between the first body 511 and the electrode assembly 200. The first center plate 521 may be in contact with a lower surface of the first body 511 located on the opposite side of the first boss 512. The first center plate 521 may be fixed to the lower surface of the first body 511 by any of various types of coupling methods, such as welding, bolting, latching, adhesion, and the like. Both, or opposite, end portions of the first center plate 521 may extend from the first body 511 toward the electrode assembly 200. Both, or opposite, end portions of the first center plate 521 may pass through the insulating plate 470 and may be disposed below the insulating plate 470.

The first center plate 521 may have a first hole H1 formed with a size and shape (e.g., a predetermined size and shape). The first hole H1 may be located at a position corresponding to the first boss 512. The first hole H1 may be located below the first boss 512 in a Z-axis direction. The first hole H1 may be formed with a size and shape that allow a first blocking member 710 of the first electrode protection member 700 to be inserted therethrough from below. Thus, the size and shape of the first hole H1 may correspond to a size and shape of the first blocking member 710. However, the shape of the first hole H1 is not necessarily limited to a circular shape and may have another shape, such as an elliptical or quadrangular shape.

The first inner plate 522 may extend in the second direction from the first center plate 521. The first inner plate 522 may extend in the second direction from an end portion of the first center plate 521. The first inner plate 522 may be disposed to face the first inner tab member 310 in the first direction. The first inner plate 522 may be in contact with an end surface of the first inner tab member 310. In an embodiment, the first inner tab member 310 and the first inner plate 522 may be joined to each other by laser welding.

The first outer plate 523 may extend in a direction opposite to the second direction from the first center plate 521. The first outer plate 523 may extend in a direction opposite to the second direction from another end portion of the first center plate 521. The first outer plate 523 may be disposed to face the first outer tab member 320 in the first direction. The first outer plate 523 may be in contact with an end surface of the first outer tab member 320. In an embodiment, the first outer tab member 320 and the first outer plate 523 may be joined to each other by laser welding.

The secondary battery 2 may further include the second connection member 600. The second connection member 600 may be disposed between the electrode assembly 200 and the cap assembly 400. The second connection member 600 may be connected to the second terminal 430 and the second tab member 302. The second connection member 600 may electrically connect the second terminal 430 and the second tab member 302. The second connection member 600 may be formed of an electrically conductive material. In an embodiment, the second connection member 600 may be formed of a same material as the second terminal 430.

The second connection member 600 may be implemented in various ways depending on the type of the secondary battery, a shape or arrangement position of the second tab member 302, and a shape or arrangement position of the second terminal 430.

As an example, the second connection member 600 may include a second current collector 610 and a second current collector plate 620, as shown in FIG. 3. In FIG. 3, the second current collector 610 and the second current collector plate 620 are illustrated as separate components, but the present invention is not limited thereto. For example, the second current collector 610 and the second current collector plate 620 may be formed as an integral member. The second current collector 610 may be connected to the second terminal 430.

The second current collector 610 may include a second body 611 and a second boss 612. The second body 611 may form a side of an exterior of the second current collector 610, and support the second boss 612. The second body 611 and the second boss 612 may be manufactured as separate members and then joined together or may be formed as an integral member.

The second body 611 may be disposed between the electrode assembly 200 and the second terminal 430. The second body 611 may be spaced apart from a lower surface of the second terminal 430 by a distance (e.g., a predetermined distance) in the direction opposite the first direction. The second body 611 may be disposed in the insulating plate 470, and the second body 611 may also be disposed on an upper or lower side of the insulating plate 470. A planar shape of the second body 611 may have any of various shapes, such as a circular shape, an oval shape, a polygonal shape, and the like, in addition to the rectangular shape, as illustrated in FIG. 3.

The second boss 612 may extend from the second body 611 and may be connected to the second terminal 430. The second boss 612 may have a cylindrical shape extending in the first direction from the second body 611. The second boss 612 may have a cylindrical shape with a thickness (e.g., a predetermined thickness) and a hollow interior.

An upper end surface of the second boss 612 may be in contact with the lower surface of the second terminal 430. In this case, the second boss 612 may vertically pass through the insulating plate 470 in the first direction. In an embodiment, the upper end surface of the second boss 612 may be joined to the lower surface of the second terminal 430 by laser welding. A planar shape of the second boss 612 may have any of various shapes, such as an oval shape, a polygonal shape, and the like, in addition to the circular shape, as illustrated in FIG. 3.

The second current collector plate 620 may be fixed to the second current collector 610, and connected to the second tab member 302. In an embodiment, the second current collector plate 620 may include a second center plate 621, a second inner plate 622, and a second outer plate 623.

The second center plate 621 may form a central portion of an exterior of the second current collector plate 620, and may be connected to the second current collector 610. The second center plate 621 may be disposed between the second body 611 and the electrode assembly 200. The second center plate 621 may be in contact with a lower surface of the second body 611 located on an opposite side of the second boss 612. The second center plate 621 may be fixed to the lower surface of the second body 611 by any of various types of coupling methods, such as welding, bolting, latching, adhesion, and the like. Both, or opposite, end portions of the second center plate 621 may extend from the second body 611 toward the electrode assembly 200. Both, or opposite, end portions of the second center plate 621 may pass through the insulating plate 470 and be disposed below the insulating plate 470.

The second center plate 621 may have a second hole H2 formed with s size and shape (e.g., a predetermined size and shape). The second hole H2 may be located at a position corresponding to the second boss 612. The second hole H2 may be located below the second boss 612 in the Z-axis direction. The second hole H2 may be formed with a size and shape that allow a second protection portion 810 of the second electrode protection member 800 to be inserted therethrough from below. Thus, the size and shape of the second hole H2 may correspond to a size and shape of the second protection portion 810. However, the shape of the second hole H2 is not necessarily limited to a circular shape and may have any of various shapes, such as an elliptical or quadrangular shape.

The second inner plate 622 may extend in a direction opposite to the second direction from the second center plate 621. The second inner plate 622 may extend in a direction opposite to the second direction from an end portion of the second center plate 621. The second inner plate 622 may be disposed to face the second inner tab member 330 in the first direction. The second inner plate 622 may be in contact with an end surface of the second inner tab member 330. In an embodiment, the second inner tab member 330 and the second inner plate 622 may be joined to each other by laser welding.

The second outer plate 623 may extend in the second direction from the second center plate 621. The second outer plate 623 may extend in to the second direction from another end portion of the second center plate 621. The second outer plate 623 may be disposed to face the second outer tab member 340 in the first direction. The second outer plate 623 may be in contact with an end surface of the second outer tab member 340. In an embodiment, the second outer tab member 340 and the second outer plate 623 may be joined to each other by laser welding.

The secondary battery 2 may further include the first electrode protection member 700 and the second electrode protection member 800. The first and second electrode protection members 700 and 800 are configured to protect the electrode assembly 200 therebelow from welding energy applied during a welding process of the first and second terminals 420 and 430 to the first and second connection members 500 and 600, respectively. In an embodiment, the first and second connection members 500 and 600 are formed as thin plate-shaped members, and during a welding process (e.g., a laser welding process) for joining the first and second connection members 500 and 600 to the first and second terminals 420 and 430, respectively, a laser beam may penetrate each of the first and second connection members 500 and 600 and enter the interior. As a result, the laser beam entering the interior may cause damage to the electrode assembly 200 below the first and second connection members 500 and 600, such as the first and second electrodes 210 and 220 and/or the separator 230. According to an embodiment, each of the first and second electrode protection members 700 and 800 is additionally disposed above the electrode assembly 200 to block welding energy (e.g., laser beam) from reaching the electrode assembly 200, thereby advantageously preventing or substantially preventing damage to the electrode assembly 200.

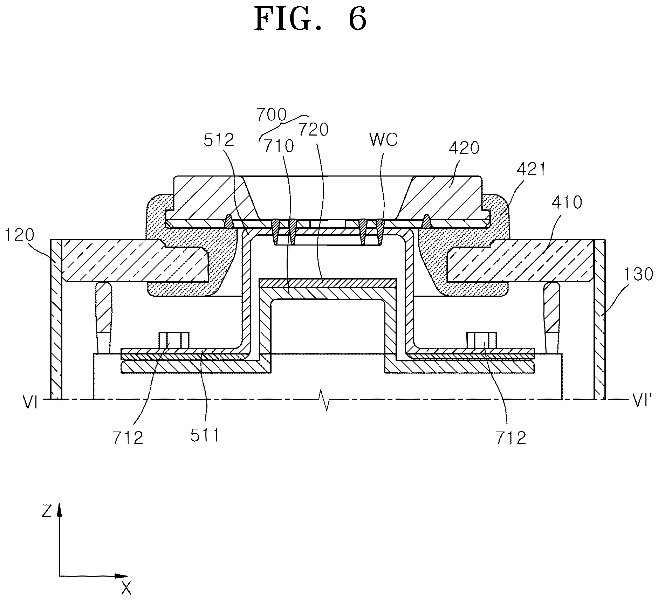

Herein, the first and second electrode protection members 700 and 800 will be described in further detail with further reference to FIGS. 6 to 8. However, to avoid unnecessary duplicate description, only the first electrode protection member 700 will be described by way of example, and a further description of the second electrode protection member 800 will be omitted. However, it will be apparent to those skilled in the art that details to be described below with respect to the first electrode protection member 700 are equally applicable to the second electrode protection member 800.

FIG. 6 is a partial cross-sectional view of the secondary battery 2 in FIG. 2, taken along the line VI-VI'.

Referring to FIGS. 3 and 6, the first electrode protection member 700 may be disposed between the first connection member 500 and the electrode assembly 200. That is, the first electrode protection member 700 may be located above the electrode assembly 200 and below the first connection member 500. The first electrode protection member 700 may be disposed with a lower surface facing the electrode assembly 200 and an upper surface facing the first connection member 500.

In an embodiment, the first electrode protection member 700 may be located below a weld joint portion WC between the first terminal 420 and the first connection member 500. As the first electrode protection member 700 is located below the weld joint portion WC, the first electrode protection member 700 can block welding energy (e.g., a laser beam) from reaching the electrode assembly 200 therebelow, even if the first connection member 500 is damaged during a welding process of joining the first terminal 420 and the first connection member 500 by welding.

In an embodiment, the first electrode protection member 700 may be formed of a material capable of blocking welding energy. In an embodiment, the weld joint portion WC is formed through laser beam welding between the first terminal 420 and the first connection member 500. In this case, the first electrode protection member 700 may be formed of any insulating material capable of blocking a laser beam. For example, the first electrode protection member 700 may be formed of a plastic material, such as polypropylene (PP), polyphenylenesulfide (PPS), or the like.

According to an example of the present embodiment, the first electrode protection member 700 may be located between the first inner plate 522 and the first outer plate 523 of the first current collector plate 520, in the Y-axis direction, that is, below the first center plate 521. That is, the first electrode protection member 700 may be located below the first current collector 510, and, in an embodiment, at least below the first boss 512.

In an embodiment, the first electrode protection member 700 may be coupled to the first connection member 500 from the lower side. As an example, the first electrode protection member 700 may be disposed below the first center plate 521 and coupled to the first center plate 521. In an embodiment, the first electrode protection member 700 partially protrudes upward from the first center plate 521 through the first hole H1 of the first center plate 521, and the protruding portion may be inserted into an inner side of the first boss 512 of the first current collector 510. In an embodiment, another portion of the first electrode protection member 700 may be coupled to the first connection member 500, for example, the first center plate 521.

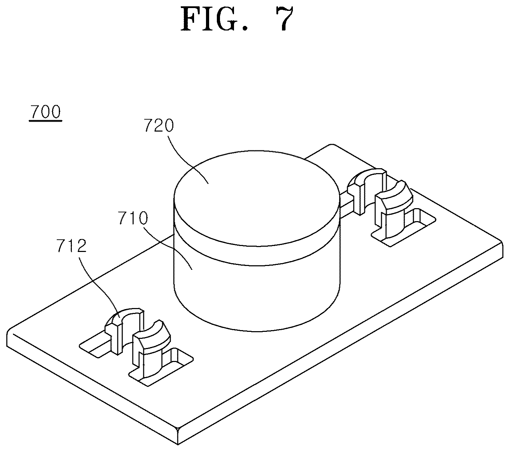

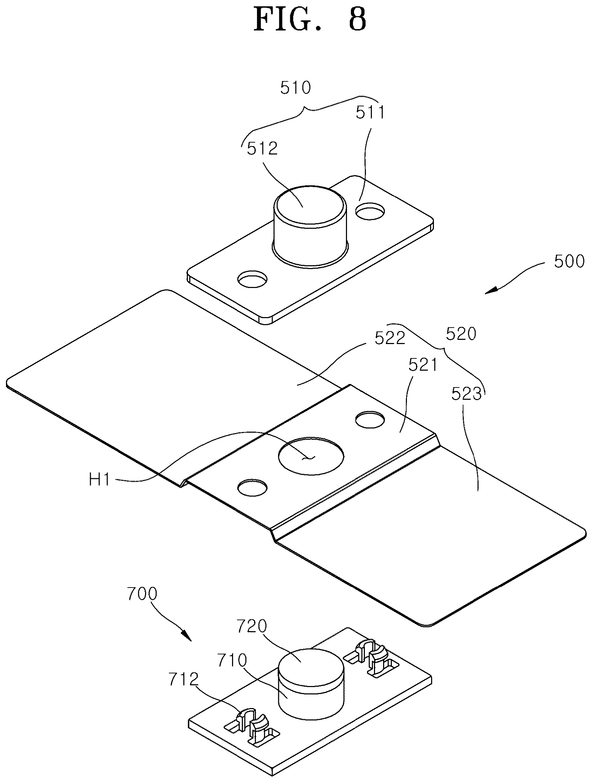

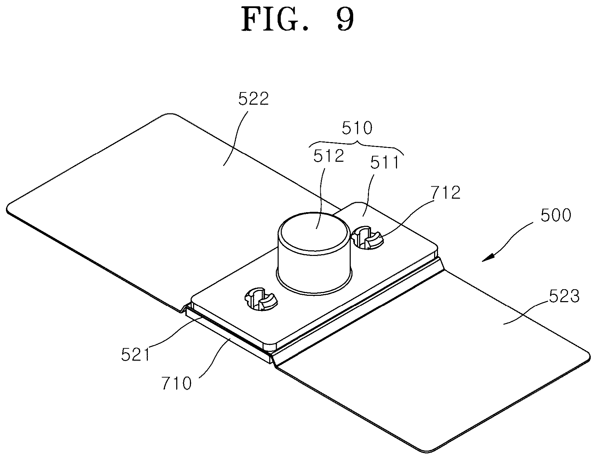

FIG. 7 is a perspective view illustrating an example of the electrode protection member according to an embodiment of the present invention; FIG. 8 is an exploded perspective view schematically illustrating a configuration of the electrode protection member and the connection member according to an embodiment of the present invention; and FIG. 9 is a perspective view illustrating an example in which the electrode protection member is coupled to the connection member.

Referring to FIGS. 6 to 9, the first electrode protection member 700 may include a first blocking member 710. The first blocking member 710 may be at least partially inserted into the first boss 512 to be disposed below the weld joint portion WC. Accordingly, the first blocking member 710 may prevent or substantially prevent a laser beam from damaging the electrode assembly 200 therebelow during the joining of the first terminal 420 and the first boss 512 by laser welding. In an embodiment, the first blocking member 710 may comprise a protection portion corresponding to a position of the first portion, and a fastening portion in a portion other than the protection portion and coupled to the first connection member 500.

In an embodiment, the first blocking member 710 may be coupled to the first connection member 500, for example, the first center plate 521. In an embodiment, the first blocking member 710 may be coupled to the first center plate 521 and the first body 511. In an embodiment, the first blocking member 710 may include a first fastening portion 712 configured to couple the first blocking member 710 to the first center plate 521 by fastening to the first center plate 521 and/or the first body 511.

In FIG. 9, the first fastening portion 712 is illustrated as being fastened to the first center plate 521 and the first body 511 of the first connection member 500, but the present invention is not limited thereto, and the first fastening portion 712 may be fastened to another part of the first connection member 500, such as the first inner plate 522 and/or the first outer plate 523. In this case, it will be apparent to those skilled in the art that the position of the first fastening portion 712 and/or the coupling method of the first blocking member 710 and the first connection member 500 may be different from those shown in FIGS. 8 and 9.

The first fastening portion 712 may have any of various shapes and structures, as long as it is capable of fastening and coupling the first blocking member 710 to the first connection member 500. For example, the first fastening portion 712 may include a coupling hook having a circular hook shape. In this case, the first connection member 500 may have a hole or an opening formed therein, into which the coupling hook of the first fastening portion 712 can be inserted and coupled. However, a shape of such a coupling hook is not limited to a circular shape and may be a linear shape or the like, and, in an embodiment, the first connection member 500 may have a groove (e.g., a linear groove) corresponding to the shape of the hook.

There are no particular limitations on the method of manufacturing the first blocking member 710 including the first fastening portion 712. For example, in an embodiment, the first blocking member 710 may be formed of a plastic material, the hook-shaped first fastening portion 712 may be manufactured using a method such as plastic injection molding.

According to an example of the present embodiment, the first electrode protection member 700 may further include a first heat dissipation layer 720 provided on at least a portion of the first blocking member 710. The first heat dissipation layer 720 may dissipate heat generated in the electrode assembly 200 due to the flow of current induced by the charging and discharging of the secondary battery 2, as well as heat generated in the first connection member 500 and the first terminal 420, which are electrically connected to the electrode assembly 200.

The first heat dissipation layer 720 may be formed of a material with excellent heat dissipation properties. For example, the first heat dissipation layer 720 may be formed of a thermal interface material (TIM). In an embodiment, the thermal interface material may include silicone, epoxy, polyimide, or the like, but the present invention is not limited thereto.

The first heat dissipation layer 720 may be disposed on at least a portion of the first blocking member 710. In an embodiment, for example, the first heat dissipation layer 720 may be disposed only on an upper surface of the first blocking member 710. In another embodiment, the first heat dissipation layer 720 may be coated over an entire surface of the first blocking member 710, including side surfaces thereof. As such, increasing an area over which the first heat dissipation layer 720 is disposed may increase a heat dissipation effect.

Referring to FIG. 1, a plurality of secondary batteries 2 are provided. The plurality of secondary batteries 2 may be arranged in two or more rows in at least one direction of a length direction (an X-axis direction based on FIG. 1) and a width direction (a Y-axis direction based on FIG. 1) of the housing 10. In FIG. 1, a case in which the plurality of secondary batteries 2 are arranged in six rows in the length direction of the housing 10 is illustrated as an example, but an arrangement form of the plurality of secondary batteries 2 is not limited thereto, and may be variously changed. In an embodiment, the plurality of secondary batteries 2 may be arranged side by side. A number of secondary batteries 2 may be variously changed depending on a size, shape, or the like of the housing 10.

The first terminal 420 of one of a pair of adjacent secondary batteries 2 and the second terminal 430 of the other one of the pair of adjacent secondary batteries 2 may be disposed to face each other in the length direction of the housing 10. That is, the front surface portion 120 of one of the adjacent secondary batteries 2 may be disposed to face the rear surface portion 130 of the other one of the adjacent secondary batteries 2.

The plurality of secondary batteries 2 may be electrically connected by a bus bar 3. The bus bar 3 may be disposed between the cover 12 and the secondary batteries 2. A plurality of bus bars 3 may be provided. Each of the bus bars 3 may connect a pair of adjacent secondary batteries 2 in series or parallel.

In an example, both, or opposite, sides of the bus bar 3 may be connected to the first terminal 420 of one of the pair of adjacent secondary batteries 2 and the second terminal 430 of the other one of the pair of adjacent secondary batteries 2, respectively. Accordingly, the plurality of secondary batteries 2 may be connected in series with each other by the bus bars 3. However, a connection form of the bus bar 3 is not limited thereto, and, in an embodiment, both, or opposite, sides are respectively connected to the first terminal 420 of one of the pair of adjacent secondary batteries 2 and the second terminal 430 of the other one of the pair of adjacent secondary batteries 2, or both, or opposite, sides are respectively connected to the second terminal 430 of one of the pair of adjacent secondary batteries 2 and the second terminal 430 of the other one of the pair of adjacent secondary batteries 2.

The bus bar 3 may be formed of an electrically conductive material, such as copper, aluminum, nickel, or the like. However, a specific shape of the bus bar 3 is not limited to that shown in FIG. 1, and may be variously changed so as to electrically connect the adjacent secondary batteries 2.

The plurality of bus bars 3 may be supported inside the housing 10 by a bus bar holder H. The bus bar holder H may be formed to have a shape of a flat plate. The bus bar holder H may be disposed between the cover 12 and the secondary batteries 2. The bus bars 3 may be fixed to the bus bar holder H by any of various types of coupling methods, such as fitting, bolting, latching, injection, and the like. In an embodiment, the bus bar holder H may include a polymer compound material that is electrically insulative.

According to one or more embodiments of the present invention, even if a connection member is partially damaged during welding of an electrode terminal and the connection member, a blocking member disposed between the connection member and the electrode assembly can prevent or substantially prevent a welding beam from reaching an electrode assembly, thereby protecting an electrode, a separator, and the like from damage. Further, the blocking member is coupled to the connection member and installed, and is made of a material with excellent heat dissipation properties, such that heat generated in the connection member can be effectively dissipated.

However, it is to be appreciated by persons skilled in the art that aspects and effects that can be achieved through the present invention are not limited to what has been described herein and other aspects, effects, and advantages of the present invention will be more clearly understood from the detailed description.

While the above invention has been described with reference to some example embodiments illustrated in the accompanying drawings, it is to be understood that the invention is not limited to the disclosed embodiments, but is intended to cover various modifications and equivalent arrangements included within the sprit and scope of the claims.

Accordingly, the scope of the present invention shall be determined according to the claims.

## Claims

1. A battery comprising:
a case (100);
an electrode assembly (200) accommodated in the case (100) and comprising an electrode;
a tab member connected to the electrode and extending from the electrode assembly (200);
a cap assembly (400) facing the electrode assembly (200) and comprising a terminal;
a connection member between the electrode assembly (200) and the cap assembly (400) and connected to the terminal and the tab member; and
an electrode protection member between the connection member and the electrode assembly (200).

2. The battery as claimed in claim 1, wherein the electrode protection member comprises a material configured to block welding energy.

3. The battery as claimed in claim 2, wherein
the welding energy is a laser beam, and
the electrode protection member comprises a plastic material.

4. The battery as claimed in claims 2 or 3, wherein the electrode protection member is coupled to the connection member.

5. The battery as claimed in claims 1 to 4, wherein the electrode protection member comprises a fastening portion coupled to the connection member.

6. The battery as claimed in claim 5, wherein
the fastening portion comprises a coupling hook, and
the connection member comprises an opening (160) in which the coupling hook is inserted and coupled.

7. The battery as claimed in claims 2 to 6, wherein the electrode protection member comprises:
a blocking member coupled to the connection member and configured to block the welding energy; and
a heat dissipation layer on at least one surface of the blocking member.

8. The battery as claimed in claim 7, wherein the heat dissipation layer comprises a thermal interface material.

9. The battery as claimed in claim 8, wherein the thermal interface material comprises any of silicone, epoxy, and polyimide.

10. A battery comprising:
a case (100) having a rectangular parallelepiped shape, with an opening;
an electrode assembly (200) accommodated in the case (100) and comprising an electrode;
a tab member connected to the electrode and extending from the electrode assembly (200);
a cap assembly (400) having a plate shape, comprising a terminal, and arranged in the opening (160) to face the electrode assembly (200);
a connection member arranged between the electrode assembly (200) and the cap assembly (400), and comprising a first portion joined to the terminal by welding and a second portion different from the first portion and connected to the tab member; and
an electrode protection member arranged below the first portion between the connection member and the electrode assembly (200).

11. The battery as claimed in claim 10, wherein the electrode protection member comprises a material configured to block welding energy applied during the welding of the first portion.

12. The battery as claimed in claim 11, wherein
the welding energy is a laser beam, and
the electrode protection member comprises a plastic material.

13. The battery as claimed in claim 11, wherein the electrode protection member comprises:
a blocking member coupled to the connection member and configured to block the welding energy; and
a heat dissipation layer on at least one surface of the blocking member.

14. The battery as claimed in claim 13, wherein the blocking member comprises a protection portion corresponding to a position of the first portion, and a fastening portion in a portion other than the protection portion and coupled to the connection member.

15. A battery pack comprising:
a housing (10); and
a plurality of batteries accommodated in the housing (10),
wherein each of the batteries comprises:
a case (100) having a rectangular parallelepiped shape, with an opening;
an electrode assembly (200) accommodated in the case (100) and comprising an electrode;
a tab member connected to the electrode and extending from the electrode assembly (200);
a cap assembly (400) having a plate shape, comprising a terminal, and arranged in the opening (160) to face the electrode assembly (200);
a connection member between the electrode assembly (200) and the cap assembly (400), and comprising a first portion joined to the terminal by welding and a second portion different from the first portion and connected to the tab member; and
an electrode protection member arranged below the first portion between the connection member and the electrode assembly (200).
